# EUROPÄISCHE PATENTSCHRIFT

(11) **EP 3 541 564 B1**
(45) Veröffentlichungstag und Bekanntmachung des Hinweises auf die Patenterteilung: **24.06.2020**
(21) Anmeldenummer: 17804138.0
(22) Anmeldetag: 16.11.2017
(51) Int. Cl.: B23K 20/04

(54) **VERFAHREN UND VORRICHTUNG ZUR HERSTELLUNG EINES KONTINUIERLICHEN BANDFÖRMIGEN VERBUNDMATERIALS**
METHOD AND DEVICE FOR PRODUCING A CONTINUOUS STRIP-SHAPED COMPOSITE MATERIAL
PROCÉDÉ ET DISPOSITIF DE FABRICATION D'UN MATÉRIAU COMPLEXE SOUS FORME DE BANDE CONTINUE

(30) Priorität: 18.11.2016 DE 102016222813; 07.12.2016 DE 102016224412; 28.12.2016 DE 102016226277
(43) Veröffentlichungstag der Anmeldung: 25.09.2019
(73) Patentinhaber: SMS Group GmbH, 40237 Düsseldorf (DE)
(72) Erfinder: RUNKEL, Thomas, 57074 Siegen (DE)
(74) Vertreter: Kross, Ulrich
(86) Internationale Anmeldenummer: PCT/EP2017/079413
(87) Internationale Veröffentlichungsnummer: WO 2018/091571

(56) Entgegenhaltungen:
- EP-A1- 0 608 905
- EP-A1- 1 980 345
- DE-A1- 10 124 594
- JP-A- S61 283 476
- US-A- 3 620 880

## Beschreibung

Die Erfindung betrifft ein Verfahren zur Herstellung eines kontinuierlichen bandförmigen Verbundmaterials nach dem Oberbegriff von Anspruch 1, und eine entsprechende Vorrichtung nach dem Oberbegriff von Anspruch 13.

Nach dem Stand der Technik ist es bekannt, zumindest zwei Materialpartner aus Metall bzw. Stahl mittels Walz- bzw. Warmschweißen zu einem Verbundmaterial zusammenzufügen. Dies ist z.B. in EP 1 690 606 B1, EP 201 202 B1, EP 053 600 B1 und EP 04 063 B1 offenbart. Hiernach werden plattenförmige Bleche zunächst aufeinander gebracht, anschließend zu einem Plattenpaket miteinander verschweißt, und dann zu einem walzplattierten Warmband bzw. Verbundmaterial warmgewalzt. Eine solche Technologie bringt den Nachteil mit sich, dass der Zwischenschritt, wonach die aufeinander gelegten plattenförmigen Bleche zunächst miteinander verschweißt werden, einen Mehraufwand für den Produktionsablauf bedeutet und die maximale Produktionskapazität begrenzt.

Nach dem Stand der Technik sind Gießwalzanlagen bekannt, mit denen Stahlbänder unter Verwendung einer Gießmaschine und nachgelagerten Walzwerk-Gerüsten kontinuierlich erzeugt werden. Bei Verarbeitung von Stahl erfolgt ein Warmwalzen des Materials typischerweise bei einer Temperatur oberhalb der Rekristallisationstemperatur von Stahl, d.h. bei einer Temperatur von beispielsweise > 720 °C. Bedingt durch die Kapazität einer einzelnen Gießmaschine, die in solchen Gießwalzanlagen eingesetzt wird, ist eine maximal mögliche Materialgeschwindigkeit und die daraus resultierende Produktionskapazität begrenzt. Ein weiterer Nachteil solcher bekannter Gießwalzanlagen - wegen der begrenzten Materialgeschwindigkeit - besteht in einer relativ langen Verweilzeit des Materials in der Anlage, was zu einer Abkühlung des Materials führt und eine zusätzliche Wärmezufuhr für das Material erfordert. Die Kosten für eine solche Wärmezuführung verschlechtern die Wirtschaftlichkeit von solchen Gießwalzanlagen. Somit sind herkömmliche kontinuierliche Gießwalzanlagen, bei denen eine einzelne Gießmaschine eingesetzt wird, nur für begrenzte Anforderungen einsetzbar.

Aus US 3 620 880 A, welche die Basis für den Oberbegriff von Anspruch 13 bildet, und EP 0 608 905 A ist jeweils bekannt, bandförmige Materialien in Kontakt miteinander zu bringen und mittels eines Rollenpaars, durch das die aufeinandergebrachten bandförmigen Materialien hindurchgeführt werden, miteinander zu verbinden. Die bandförmigen Materialien bestehen nicht aus dem Material Stahl und werden, bevor sie mittels des Rollenpaars miteinander verbunden werden, nicht nochmals erwärmt.

Entsprechend liegt der Erfindung die Aufgabe zugrunde, die Herstellung eines kontinuierlichen Metallbandes in Form eines bandförmigen Stahl-Verbundmaterials, bei der zumindest eine Gießmaschine zum Einsatz kommt, hinsichtlich der Wirtschaftlichkeit und/oder des möglichen Produktspektrums zu optimieren.

Diese Aufgabe wird durch ein Verfahren gemäß Anspruch 1 und durch eine Vorrichtung mit den in Anspruch 13 angegebenen Merkmalen gelöst. Vorteilhafte Weiterbildungen der Erfindung sind Gegenstand der abhängigen Ansprüche.

Ein Verfahren nach der vorliegenden Erfindung dient zur Herstellung eines kontinuierlichen Metallbandes in Form eines bandförmigen Verbundmaterials, mit den Schritten: Erzeugen zumindest eines kontinuierlichen Strangs aus Stahl oder aus einer Stahl-Legierung durch eine erste Gießmaschine, und Warmwalzen einer Bramme, die sich durch Erstarren des Strangs gebildet hat. Hierbei werden folgende Schritte durchgeführt: (i) Erzeugen zumindest eines weiteren kontinuierlichen Strangs aus Stahl oder aus einer Stahl-Legierung durch zumindest eine zweite Gießmaschine; (ii) Zusammenführen bzw. In-Richtung-Zueinander-Bringen von Brammen, die sich aus den Strängen, die durch die erste Gießmaschine und durch die zweite Gießmaschine erzeugt worden sind, durch Erstarren gebildet haben, im warmen Zustand, bei dem diese Brammen jeweils eine Temperatur von zumindest 720°C aufweisen; und (iii) Warmwalzen eines Verbunds gebildet aus den zusammengeführten bzw. in-Richtung-zueinander-gebrachten Brammen, so dass damit durch Walzplattieren ein einziges kontinuierliches bandförmiges Verbundmaterial entsteht, wobei beide Brammen gebildet aus den mit der ersten/zweiten Gießmaschine erzeugten Strängen vor dem Schritt (iii) mittels einer Induktionsheizung erwärmt werden, um die Temperatur der Brammen gezielt zu beeinflussen und an die Temperatur der jeweils anderen Bramme anzupassen.

In gleicher Weise sieht die Erfindung eine Vorrichtung zur Herstellung eines kontinuierlichen Metallbandes in Form eines bandförmigen Verbundmaterials vor. Diese Vorrichtung umfasst zumindest eine erste Gießmaschine, mit der ein kontinuierlicher Strang insbesondere aus Stahl erzeugt wird, und zumindest ein Walzgerüst, das in Linie mit der ersten Gießmaschine und stromabwärts hiervon angeordnet ist, wobei eine durcherstarrte Bramme des mit der ersten Gießmaschine erzeugten Strangs warmwalzbar ist. Es ist zumindest eine zweite Gießmaschine vorgesehen, mit der ein weiterer kontinuierlicher Strang aus Metall erzeugt wird, wobei diese zweite Gießmaschine in Linie mit dem Walzgerüst und stromaufwärts hiervon angeordnet ist. Zwischen einerseits den Gießmaschinen und andererseits dem Walzgerüst ist eine Zusammenführungseinrichtung angeordnet, mittels der eine Bramme, die sich aus einem mit der ersten Gießmaschine erzeugten Strang durch Erstarren gebildet hat, und eine Bramme, die sich aus einem mit der zweiten Gießmaschine erzeugten Strang durch Erstarren gebildet hat, im warmen Zustand in Richtung zueinander gebracht werden können. Das Walzgerüst ist als Walzplattierungseinrichtung ausgebildet, mittels der ein Verbund gebildet aus den zusammengeführten Brammen warmgewalzt werden kann, so dass damit durch Walzplattieren ein einziges Metallband in Form eines kontinuierlichen bandförmigen Verbundmaterial entsteht. Zwischen der der Zusammenführungseinrichtung und einer unmittelbar stromabwärts davon angeordneten Walzplattierungseinrichtung ist zumindest eine Temperaturbeeinflussungseinrichtung in Form einer Induktionsheizung vorgesehen, mittels der die Oberflächentemperatur zumindest einer aus den Strängen gebildeten Bramme an einer Seite, die der jeweils anderen Bramme gegenüberliegt, beeinflussbar ist.

Im Sinne der vorliegenden Erfindung sind die nachstehenden Aspekte wie folgt zu verstehen:
- Das Merkmal "Bramme" ist dahingehend zu verstehen, dass es sich hierbei um einen gegossenen Strang aus Metall handelt, der bereits weitgehend vollständig durcherstarrt ist, so dass ein Walzen dieser Bramme möglich ist, ohne dass dabei die Gefahr besteht, dass noch flüssige Anteile des Metalls aus dem Innern nach außen herausgequetscht werden. Eine solche Bramme kann als ein Endlos-Profil ausgebildet sein, das mittels einer Gießmaschine hergestellt bzw. gegossen wird, z.B. durch Stranggießen.
- Das Merkmal "Zusammenführen von Brammen", wie es z.B. für den Schritt (ii) des erfindungsgemäßen Verfahrens definiert ist, ist dahingehend zu verstehen ist, dass hierbei die Brammen in Richtung zueinander gebracht werden. Dies kann bedeuten, dass die einzelnen Brammen sich während des Schritts (ii) bzw. an dessen Ende noch nicht berühren bzw. kontaktieren. Jedenfalls werden die einzelnen Brammen durch das Zusammenführen gemäß Schritt (ii), das in der Zusammenführungseinrichtung durchgeführt wird, derart in Richtung zueinander gebracht, dass anschließend, nämlich in Schritt (iii) des erfindungsgemäßen Verfahrens bzw. in der Walzplattierungseinrichtung der erfindungsgemäßen Vorrichtung ein Verbund gebildet aus den zusammengeführten Brammen warmgewalzt werden kann.
- Das Attribut "warm" bzw. die Definition "im warmen Zustand", das bzw. die im Zusammenhang mit dem Schritt (ii) genannt ist, bezieht sich auf die Temperatur der Materialpartner bzw. der Brammen, und ist dahingehend zu verstehen, dass diese Temperatur oberhalb der Rekristallisationstemperatur (z.B. 720°C) liegt.

Der Erfindung liegt die wesentliche Erkenntnis zugrunde, dass der Gießwalz-Prozess, bei dem durch Warmwalzen bzw. Walzplattieren von zumindest zwei im warmen Zustand zusammengeführten Brammen ein einziges Stahlband in Form eines kontinuierlichen bandförmigen Verbundmaterials erzeugt wird, durch den Einsatz zumindest einer zweiten Gießmaschine hinsichtlich sowohl der Produktionskapazität als auch einer Erweiterung des Einsatzbereiches bzw. des möglichen Produktspektrums verbessert wird. Der Einsatz von zumindest zwei Gießmaschinen, die vor bzw. stromaufwärts eines Walzwerks in Form einer Walzplattierungseinrichtung angeordnet sind, und das Warmwalzen von Brammen, die sich aus den mit diesen Gießmaschinen erzeugten Strängen durch Erstarren gebildet haben, vergrößert vorteilhaft den Gesamtdurchsatz für den Gießwalz-Prozess, und ermöglicht zugleich eine Erhöhung der erzielbaren Enddicken, z.B. von bis zu 10 mm. Die erfindungsgemäße Vorrichtung kann als "RR-Anlage" bezeichnet werden. Des Weiteren ermöglicht die Verwendung von verschiedenen Materialien, die mit den Gießmaschinen vergossen werden, die Realisierung von spezifischen Materialeigenschaften des erzeugten kontinuierlichen bandförmigen Verbundmaterials.

Als Material, das mit den Gießmaschinen vergossen wird, können Stahl oder Stahl-Legierungen verwendet werden. Grundsätzlich ist es für die vorliegende Erfindung möglich, dass die mit den einzelnen Gießmaschinen erzeugten Stränge aus unterschiedlichen Materialgüten bestehen. Beispielsweise können in den einzelnen Gießmaschinen unterschiedliche Stahlgüten vergossen werden, die dann im Schritt (iii) des erfindungsgemäßen Verfahrens zu einem einzigen kontinuierlichen bandförmigen Verbundmaterial verbunden werden.

In vorteilhafter Weiterbildung des erfindungsgemäßen Verfahrens wird vor dem Schritt (ii) eine Geschwindigkeit zumindest einer Bramme, die aus den mit der ersten bzw. zweiten Gießmaschine durch Erstarren gebildeten Stränge gebildet ist, gezielt beeinflusst. Diese Beeinflussung der Geschwindigkeit der zumindest einen Bramme kann entweder gesteuert oder geregelt erfolgen, in Abhängigkeit von weiteren Prozessgrößen des Gießwalz-Prozesses, was nachstehend noch im Detail erläutert ist. Zur Beeinflussung der Geschwindigkeit der zumindest einen Bramme kann zur Durchführung des erfindungsgemäßen Verfahrens bzw. für die erfindungsgemäße Vorrichtung ein Ausgleichswalzgerüst vorgesehen sein, dass in Linie zwischen der ersten bzw. zweiten Gießmaschine und der Zusammenführungseinrichtung angeordnet ist, wobei die Bramme durch dieses Ausgleichswalzgerüst hindurchgeführt wird, um deren Geschwindigkeit zu beeinflussen. Zweckmäßigerweise können zwei separate Ausgleichswalzgerüste vorgesehen sein, die jeweils in Linie mit der ersten bzw. zweiten Gießmaschine angeordnet und stromabwärts hiervon vorgesehen sind.

Das Warmwalzen der beiden Brammen, die sich durch Erstarren aus den mit den Gießmaschinen erzeugten Strängen gebildet haben, und das gewünschte Verbinden dieser beiden Brammen zu einem einzigen kontinuierlichen bandförmigen Verbundmaterial mittels Warmwalzen wird dadurch verbessert, dass die Temperatur dieser beiden Brammen aneinander angepasst wird, bevor in Schritt (iii) das Warmwalzen der Brammen erfolgt. Diese Erwärmung, die für die Brammen jedenfalls vor dem Schritt (iii) durchgeführt wird, kann für zumindest eine der Brammen auch vor dem Schritt (ii) erfolgen, um die Temperatur dieser Bramme gezielt zu beeinflussen und an die Temperatur der jeweils anderen Bramme anzupassen. Hierbei ist es auch möglich, diese Erwärmung für beide Brammen gleichzeitig durchzuführen. Zur Erwärmung von zumindest einer Bramme ist zumindest eine Erwärmungseinrichtung vorgesehen, die stromaufwärts der Zusammenführungseinrichtung und/oder als Teil hiervon angeordnet sein kann, wobei die Bramme(n) durch diese Erwärmungseinrichtung hindurchgeführt wird/werden. Ein besonders hoher Energieeintrag lässt sich z.B. mit einer Erwärmungseinrichtung in Form einer Induktionsheizung erzielen, verbunden mit dem Vorteil, dass diese einen nur geringen Bauraum beansprucht, bei gleichzeitig hoher Energiedichte.

In vorteilhafter Weiterbildung der Erfindung kann vorgesehen sein, dass die aus den mit den Gießmaschinen erzeugten Strängen durch Erstarren gebildeten Brammen vor dem Schritt (ii) seitlich geführt werden, um dadurch die Brammen relativ zueinander auszurichten. In gleicher Weise kann dies auch während des Schritts (ii) und/oder vor dem Schritt (iii) erfolgen. Hierzu ist zumindest eine Seitenbeeinflussungseinrichtung vorgesehen, die stromaufwärts der Zusammenführungseinrichtung und/oder als Teil dessen angeordnet sein kann. Ergänzend oder alternativ kann diese Seitenbeeinflussungseinrichtung auch stromaufwärts der Walzplattierungseinrichtung angeordnet sein. Die Seitenbeeinflussungseinrichtung kann z.B. in Form einer Führungsrolle oder eines Führungslineals ausgebildet sein, mit der bzw. mit dem die Seitenränder der Brammen in Kontakt gelangen, um wie erläutert seitlich zueinander ausgerichtet zu werden.

In vorteilhafter Weiterbildung der Erfindung kann die vorstehend genannte Seitenbeeinflussungseinrichtung in Form eines Führungslineals ausgebildet sein, das durch einen Aktuator insbesondere mit einer vorbestimmten Kraft in Richtung der Bandmitte bewegt wird. In dieser Weise ist auch eine Ausrichtung der beiden Brammen in Richtung der Bandmitte möglich.

In vorteilhafter Weiterbildung der Erfindung kann vorgesehen sein, dass eine Seitenbeeinflussungseinrichtung, vorzugsweise in Form eines Führungslineals, auch stromabwärts der Walzplattierungseinrichtung vorgesehen ist. Für diesen Fall ist sichergestellt, dass das erzeugte kontinuierliche bandförmige Verbundmaterial auch nach dem Schritt (iii) seitlich geführt wird, z.B. um das Verbundmaterial zentriert in der Mitte eines Rollgangs durch die Walzstraße und deren zugehörige Walzgerüste hindurch zu führen. Hierbei kann auch vorgesehen sein, dass ein Führungslineal mit einer vorbestimmten Kraft in Richtung der Bandmitte bewegt wird, um das erzeugte Verbundmaterial an seinen Seitenrändern zu kontaktieren und (ggf. in Richtung der Bandmitte zurück-) zu führen.

Das Verbinden der einzelnen Materialpartner mittels des Warmwalzens in Schritt (iii) bzw. durch die Walzplattierungseinrichtung wird dadurch optimiert, wenn zumindest eine Bramme, die aus den mit der ersten/zweiten Gießmaschine erzeugten Strängen durch Erstarren gebildet worden ist, vor dem Schritt (iii) geeignet gereinigt wird, nämlich an der Oberfläche dieser Bramme, die der jeweils anderen Bramme gegenüberliegt und damit beim Warmwalzen in Schritt (iii) in Kontakt gelangt. Vorzugsweise werden beide Brammen, die aus den mit der ersten und zweiten Gießmaschine erzeugten Stränge durch Erstarren gebildet worden sind, an ihren einander gegenüberliegenden Oberflächen gereinigt. Hierzu ist für die erfindungsgemäße Vorrichtung zumindest eine Reinigungseinrichtung vorgesehen, die zwischen einerseits den Gießmaschinen und andererseits der Zusammenführungseinrichtung angeordnet ist. Ggf. kann die Reinigungseinrichtung auch als Teil der Zusammenführungseinrichtung ausgebildet sein. Eine solche Reinigung der Brammen kann mechanisch erfolgen, zum Beispiel durch Strahlen, Bürsten, Schleifen, Hobeln, Fräsen oder dergleichen. Ergänzend oder alternativ hierzu ist es möglich, die Reinigung der Bramme(n) in Form eines Entzunderns durchzuführen, wobei ein Fluid, vorzugsweise Hochdruck-Wasser, auf die Oberflächen der Bramme(n) aufgebracht wird. Für diesen Fall ist die Reinigungseinrichtung als Entzunderungseinrichtung ausgebildet, mittels der ein Fluid vorzugsweise unter Hochdruck auf die Oberfläche von zumindest einer Bramme ausbringbar ist. Das Entzundern der Bramme(n) empfiehlt sich insbesondere für den Fall, wenn ein Strang, aus dem sich durch Erstarren eine Bramme bildet, aus Stahl oder einer Stahl-Legierungen besteht.

Das Verbinden der einzelnen Materialpartner mittels des Warmwalzens in Schritt (iii) bzw. durch die Walzplattierungseinrichtung wird weiter dadurch optimiert werden, dass vor dem Schritt (iii) bzw. stromaufwärts der Walzplattierungseinrichtung eine Oberflächentemperatur zumindest einer Bramme, die sich aus den mit der ersten/zweiten Gießmaschine erzeugten Stränge durch Erstarren gebildet hat, verändert wird. Hierzu ist für die erfindungsgemäße Vorrichtung eine Temperaturbeeinflussungseinrichtung in Form einer Induktionsheizung vorgesehen, die zwischen der Zusammenführungseinrichtung und einer unmittelbar stromabwärts davon angeordneten Walzplattierungseinrichtung positioniert ist. Vorzugsweise wird eine solche Veränderung der Oberflächentemperatur durch eine Erhöhung der Temperatur realisiert, wobei die besagte Temperaturbeeinflussungseinrichtung z.B. als Heizstrahler oder dergleichen ausgebildet sein kann, der auf die Oberfläche einer Bramme gerichtet ist.

Die Qualität einer Verbindung von zumindest zwei Materialpartnern, aus denen das gewünschte kontinuierliche bandförmigem Verbundmaterial hergestellt wird, kann weiter dadurch verbessert werden, dass die aus den mit der ersten/zweiten Gießmaschine erzeugten Strängen durch Erstarren gebildeten Brammen in einer Schutzgas-Atmosphäre geführt werden. Hierzu ist eine Schutzgas-Einrichtung vorgesehen, die vor der Zusammenführungseinrichtung angeordnet ist, und/oder als Teil der Zusammenführungseinrichtung und/oder als Teil einer stromabwärts unmittelbar angrenzend an die Zusammenführungseinrichtung angeordneten Walzplattierungseinrichtung ausgebildet ist. Entsprechend werden die Brammen bei dem erfindungsgemäßen Verfahren vor dem Schritt (ii) und/oder während des Schritts (ii) und/oder vor dem Schritt (iii) in einer Schutzgas Atmosphäre geführt. Falls die Brammen aus Stahl oder einer Stahl-Legierung bestehen, wird hierdurch die Bildung von Zunder zumindest vermindert oder gar ausgeschlossen.

Das Verbinden der einzelnen Materialpartner kann dadurch verbessert werden, wenn vor dem Schritt (iii) bzw. stromaufwärts der Walzplattierungseinrichtung eine Profilierung von zumindest einem mit der ersten/zweiten Gießmaschine erzeugten Strang bzw. einer hieraus durch Erstarren gebildeten Bramme erfolgt. Bei einer solchen Profilierung kann ein Strang bzw. eine hieraus gebildete Bramme an einem Seitenrand davon schräg angefast werden. Ergänzend und/oder alternativ kann bei einer solchen Profilierung vorgesehen sein, dass ein Strang, vorzugsweise eine hieraus gebildete Bramme, durch einen vertikalen Schnitt besäumt wird. Jedenfalls wird durch die vorstehend genannte Profilierung sichergestellt, dass die zumindest zwei Brammen, die im Schritt (iii) bzw. durch die Walzplattierungseinrichtung warmgewalzt werden, auch im Bereich ihrer Ränder derart aufeinander liegen bzw. zueinander ausgerichtet sind, dass ein Verbinden dieser Brammen durch das anschließende Warmwalzen in homogener Weise gewährleistet ist.

In vorteilhafter Weiterbildung der Erfindung kann vorgesehen sein, dass im Anschluss an den Schritt (iii) eine Materialbeschaffenheit des erzeugten einzigen kontinuierlichen bandförmigen Verbundmaterials erfasst wird, vorzugsweise durch Röntgen und/oder Ultraschall. Zu diesem Zweck ist für die erfindungsgemäße Vorrichtung stromabwärts einer Walzplattierungseinrichtung eine Messeinrichtung vorgesehen, mittels der eine innere Materialbeschaffenheit des erzeugten einzigen kontinuierlichen bandförmigen Verbundmaterials, insbesondere die Verbindungsqualität erfasst werden kann. Zweckmäßigerweise wird auf Grundlage der erfassten Materialbeschaffenheit dann durch eine Steuereinrichtung ein Prozesssignal erzeugt, mit dem für das erfindungsgemäße Verfahren ein Regelkreis ausgebildet werden kann.

In vorteilhafter Weiterbildung des erfindungsgemäßen Verfahrens kann vorgesehen sein, dass dieses Verfahren automatisch in Abhängigkeit von zumindest einer vorbestimmten Prozessgröße durchgeführt wird. Unter Bezugnahme auf die vorhergehende Erläuterung der Erfindung kann diese Prozessgröße z.B. aus der Geschwindigkeit, die vor dem Schritt (ii) für die aus den mit den Strängen durch Erstarren gebildeten Brammen vorliegt, und/oder aus der Materialbeschaffenheit des erzeugten kontinuierlichen bandförmigen Verbundmaterials bestehen. Des Weiteren kann eine solche Prozessgröße auch gewählt sein aus der Gruppe gebildet insbesondere aus der Gießgeschwindigkeit der ersten/ zweiten Gießmaschine, einer Änderung der Liquid-Core-Reduction der mit den Gießmaschinen erzeugten Stränge, einem Temperaturunterschied der einzelnen Brammen vor dem Schritt (ii) und/oder vor dem Schritt (iii), einer jeweiligen Geschwindigkeit der Arbeitswalzen der Walzplattierungseinrichtung und/oder einer Dickenreduzierung, die für das erzeugte einzige bandförmigem Verbundmaterial in Schritt (iii) erzielt wird. Auf Grundlage der vorstehend genannten möglichen Prozessgrößen kann das erfindungsgemäße Verfahren als Regelkreis ausgebildet sein und entsprechend automatisch durchgeführt werden.

In vorteilhafter Weiterbildung der Erfindung kann vorgesehen sein, dass eine Geschwindigkeit der jeweiligen Arbeitswalzen einer Walzplattierungseinrichtung derart angesteuert werden, dass einer möglichen "Skibildung" des bandförmigen Verbundmaterials, das durch die bzw. in der Walzplattierungseinrichtung warmgewalzt wird, beim Austreten aus dieser Walzplattierungseinrichtung entgegengewirkt wird. Dies empfiehlt sich insbesondere für eine erste Walzplattierungseinrichtung, die stromabwärts unmittelbar angrenzend an die Zusammenführungseinrichtung angeordnet ist. Entsprechend ist ein weiterer Transport des erzeugten kontinuierlichen bandförmigen Verbundmaterials in der Walzstrasse möglich, ohne dass sich eine "Skibildung" am vorderen Ende des erzeugten bandförmigen Verbundmaterials einstellt und dadurch eine Schädigung von Walzgerüsten stromabwärts der Zusammenführungseinrichtung zu befürchten wäre.

In vorteilhafter Weiterbildung der Erfindung kann vorgesehen sein, dass das erzeugte kontinuierliche bandförmigem Verbundmaterial im Anschluss an den Schritt (iii) bzw. stromabwärts einer Walzplattierungseinrichtung, die unmittelbar an die Zusammenführungseinrichtung angrenzt, durchtrennt bzw. vereinzelt wird, mit dem Ziel der Verbesserung von nachfolgenden Prozessschritten und/oder zur Erzeugung der Längen des in dieser Anlage erzeugten Endprodukts.

Ergänzend und/oder alternativ kann vorgesehen sein, dass stromabwärts einer unmittelbar an die Zusammenführungseinrichtung angeordneten Walzplattierungseinrichtung eine Niederhaltevorrichtung positioniert ist, mittels der eine Skibildung des erzeugten einzigen kontinuierlichen bandförmigen Verbundmaterials verhindert wird.

In vorteilhafter Weiterbildung der Erfindung kann vorgesehen sein, dass eine dritte Gießmaschine vorgesehen ist, mit der in Schritt (i) des erfindungsgemäßen Verfahrens ein weiterer kontinuierlicher Strang erzeugt wird. Diese dritte Gießmaschine ist ebenfalls in Linie mit der Walzplattierungseinrichtung angeordnet, vorzugsweise stromaufwärts hiervon. Entsprechend werden die anschließenden Schritte (ii) und (iii) des erfindungsgemäßen Verfahrens mit insgesamt drei Brammen durchgeführt, die sich aus den mit der ersten, zweiten und dritten Gießmaschine erzeugten Strängen jeweils durch Erstarren gebildet haben. Alternativ hierzu kann vorgesehen sein, dass die Bramme, die sich durch Erstarren aus dem mit der dritten Gießmaschine erzeugten Strang gebildet hat, mit dem in Schritt (iii) bereits gebildeten einzigen kontinuierlichen bandförmigen Verbundmaterial im warmen Zustand mit erneuter Durchführung der Schritte (ii) und (iii) verbunden wird. Für diesen Fall ist die dritte Gießmaschine stromabwärts einer ersten Walzplattierungseinrichtung, die unmittelbar an die Zusammenführungseinrichtung für die Brammen, die sich aus den mit der ersten/zweiten Gießmaschine erzeugten Strängen durch Erstarren gebildet haben, angrenzt, angeordnet. Jedenfalls kann beim Einsatz von z.B. drei Gießmaschinen ein kontinuierliches bandförmiges Verbundmaterial hergestellt werden, das z.B. in seiner obersten und untersten Lage aus Stählen mit gleichen Eigenschaftsprofilen besteht, wobei eine mittlere Lage dieses Verbundmaterials z.B. aus einem Stahl gebildet ist, der sich in seinen Eigenschaften von den für die Randlagen verwendeten Materialien unterscheidet.

In vorteilhafter Weiterbildung der Erfindung kann vorgesehen sein, zwischen die zusammenzuführenden Brammen eine oder mehrere Zwischenschichten in fester, flüssiger oder pulverisierter Form eingebracht werden. Eine solche Zwischenschicht kann die einander gegenüberliegenden Oberflächen der Brammen passivieren oder aktivieren. In Folge dessen werden die Verzunderungsneigung an den Oberflächen der Brammen verringert, und/oder die Diffusionsvorgänge zwischen den Materialpartnern in vorteilhafter Weise beeinflusst.

Weitere Vorteile der vorliegenden Erfindung bestehen aus folgenden Aspekten:
- Größere Dicken für das erzeugte kontinuierliche bandförmige Verbundmaterial,
- höhere Produktionsleistung und verbesserte Wirtschaftlichkeit,
- Erweiterung der zu produzierenden Stahlsorten,
- höherer Umformgrad im Vergleich zu herkömmlichen Gießwalzanlagen,
- Erzeugung von Grobblechen und von Coils, die aus dem erzeugten kontinuierliche bandförmigem Verbundmaterial bestehen,
- Erzeugung von walzplattierten Grobblechen und Coils, und
- mögliche Substituierung sowohl von herkömmlichen Kaltwalzwerken als auch von Materialwalzungen in konventionellen Warmwalzwerken.

Nachstehend sind Ausführungsbeispiele der Erfindung anhand einer schematisch vereinfachten Zeichnung im Detail beschrieben.

Es zeigen:
- Fig. 1: eine prinzipielle Seitenansicht einer erfindungsgemäßen Vorrichtung, bei der zumindest zwei Gießmaschinen eingesetzt werden,
- Fig. 2: eine prinzipielle Seitenansicht einer erfindungsgemäßen Vorrichtung nach einer weiteren Ausführungsform,
- Fig. 3: eine prinzipielle Seitenansicht einer alternativen Zusammenführungseinrichtung, die Teil der Vorrichtung von Fig. 1/Fig. 2 sein kann, und
- Fig. 4a, 4b: Seitenansichten von Arbeitswalzen einer Walzplattierungseinrichtung, die Teil der Vorrichtung von Fig. 1 bzw. Fig. 2 ist.

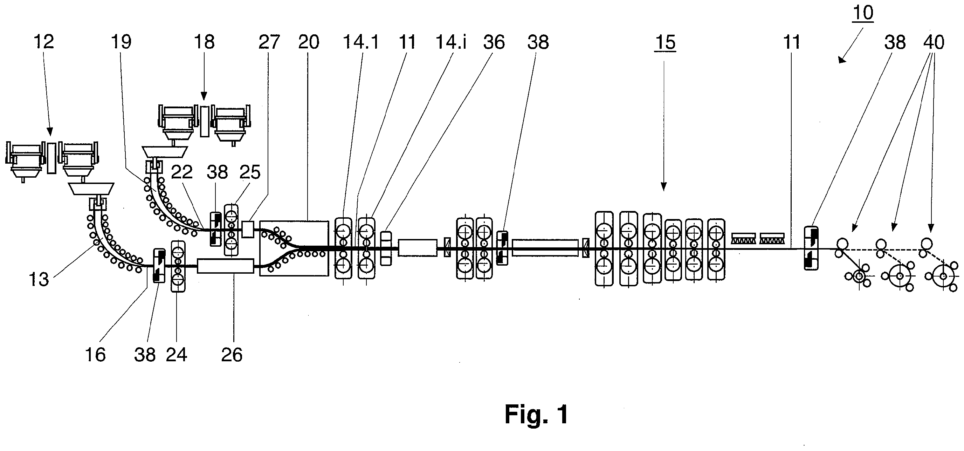

Nachstehend sind unter Bezugnahme auf die Fig. 1 bis 4 bevorzugte Ausführungsformen einer erfindungsgemäßen Vorrichtung 10 und Komponenten hiervon erläutert, wobei diese Vorrichtung 10 zur Herstellung eines Metallbands in Form eines kontinuierlichen bandförmigen Verbundmaterials 11 dient. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

In der Fig. 1 ist eine prinzipiell vereinfachte Seitenansicht der Vorrichtung 10 nach einer ersten Ausführungsform gezeigt.

Die Vorrichtung 10 umfasst eine erste Gießmaschine 12, mit der ein kontinuierlicher Strang 13 insbesondere aus Stahl erzeugt wird. Des Weiteren umfasst die Vorrichtung 10 eine zweite Gießmaschine 18, mit der ein kontinuierlicher Strang 19 insbesondere aus Stahl oder aus einem anderen Metall (z.B. ein Nicht-Eisen-Metall) erzeugt wird. Aus den beiden Strängen 13 bzw. 19 bilden sich durch Erstarren jeweils Brammen 16 bzw. 22, die anschließend durch eine Zusammenführungseinrichtung 20, die stromabwärts der Gießmaschinen 12, 18 angeordnet ist, geführt und hierdurch in Richtung zueinander gebracht werden. Die Vorrichtung umfasst des Weiteren zumindest ein Walzgerüst in Form einer Walzplattierungseinrichtung 14.1, die unmittelbar im Anschluss an die Zusammenführungseinrichtung 20 und somit stromabwärts hiervon angeordnet ist. Die Funktion dieser Walzplattierungseinrichtung 14.1 ist nachstehend noch gesondert erläutert.

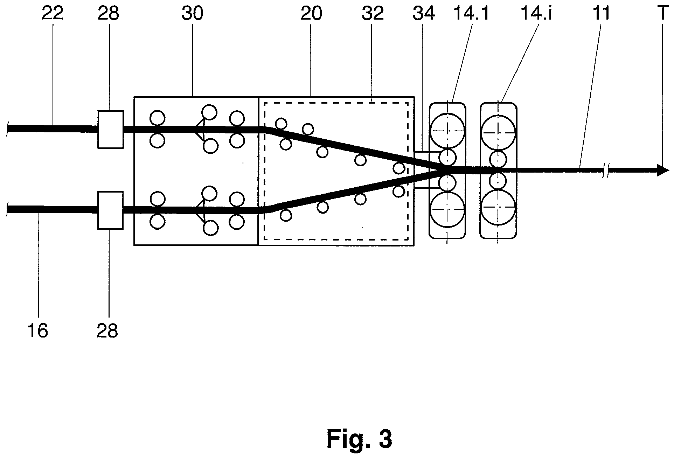

Die Zusammenführungseinrichtung 20 dient zu dem Zweck, die beiden Brammen 16 und 22 in Richtung zueinander zu bringen. Bei der in Fig. 1 dargestellten Ausführungsform kann vorgesehen sein, dass die beiden Brammen 16 und 22 bereits innerhalb der Zusammenführungseinrichtung 20 in Kontakt miteinander gelangen. Nach einer alternativen Ausführungsform der Zusammenführungseinrichtung 20, die prinzipiell vereinfacht in der Seitenansicht gemäß Fig. 3 gezeigt ist und ebenfalls für die Vorrichtung von Fig. 1 eingesetzt werden kann, ist vorgesehen, dass die beiden Brammen 16 und 22 sich nicht innerhalb dieser Zusammenführungseinrichtung 20, sondern erst außerhalb und stromabwärts hiervon kontaktieren, wenn sie in die unmittelbar angrenzend daran positionierte Walzplattierungseinrichtung 14.1 einlaufen.

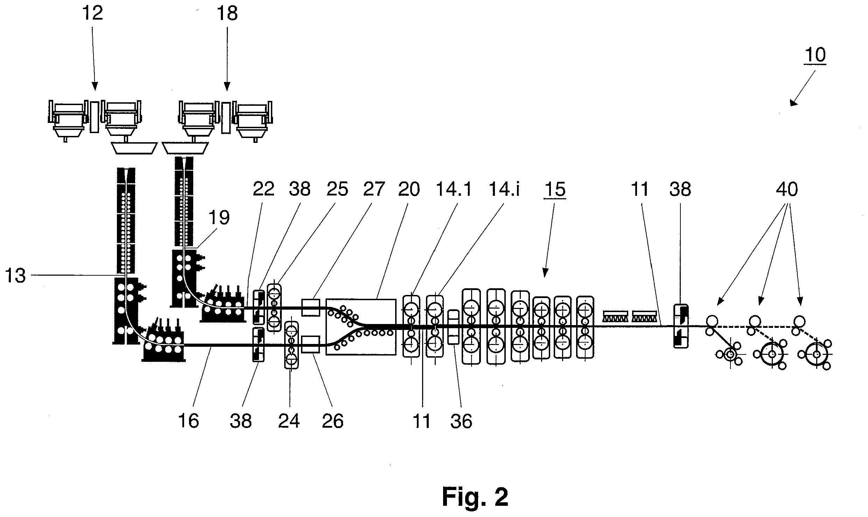

In Fig. 3 ist mit dem Pfeil "T" eine Transportrichtung angedeutet, in der das erzeugte kontinuierliche bandförmige Verbundmaterial 11 transportiert bzw. bewegt wird (in der Zeichnungsebene von links nach rechts). Bezüglich der Darstellungen von Fig. 1 und Fig. 2 versteht sich, dass hierin das Verbundmaterial 11 in der gleichen Richtung bewegt wird, nämlich (in der Zeichnungsebene gesehen) von links nach rechts.

Die Vorrichtung 10 weist ein erstes Ausgleichswalzgerüst 24 auf, das in Linie zwischen der ersten Gießmaschine 12 und der Zusammenführungseinrichtung 20 angeordnet ist. Des Weiteren weist die Vorrichtung 10 ein zweites Ausgleichswalzgerüst 25 auf, das in Linie zwischen der zweiten Gießmaschine 18 und der Zusammenführungseinrichtung 20 angeordnet ist. Die Bramme 16, die sich durch Erstarren aus dem mit der ersten Gießmaschine 12 erzeugten Strang 13 gebildet hat, wird durch das erste Ausgleichswalzgerüst 24 hindurchgeführt. In gleicher Weise wird die Bramme 22, die sich durch Erstarren aus dem mit der zweiten Gießmaschine 18 erzeugten Strang 19 gebildet hat, durch das zweite Ausgleichswalzgerüst 25 hindurchgeführt. Hierdurch ist es möglich, mittels der Ausgleichswalzgerüste 24/25 eine Geschwindigkeit der Brammen 16/22 in Richtung der Zusammenführungseinrichtung 20 zu steuern, vorzugsweise zu regeln.

Die Vorrichtung 10 umfasst eine erste Erwärmungseinrichtung 26, die in Linie zwischen der ersten Gießmaschine 12 und der Zusammenführungseinrichtung 20 angeordnet ist, und eine zweite Erwärmungseinrichtung 27, die in Linie zwischen der zweiten Gießmaschine 18 und der Zusammenführungseinrichtung 20 angeordnet ist. Die Seitenansicht von Fig. 1 verdeutlicht, dass die Brammen 16 bzw. 22 durch die erste Erwärmungseinrichtung 26 bzw. durch die zweite Erwärmungseinrichtung 27 hindurchgeführt werden. Hierdurch werden mögliche Temperaturunterschiede, die in Folge einer unterschiedlich langen Transportstrecke zwischen der Bramme 16, die sich aus dem mit der ersten Gießmaschine 12 erzeugten Strang 13 durch Erstarren gebildet hat, und der Bramme 22, die sich aus dem mit der zweiten Gießmaschine 18 erzeugten Strang 19 durch Erstarren gebildet hat, auftreten können, ausgeglichen. In Folge dessen treten die Brammen 16/22 vorzugsweise mit der gleichen Temperatur in die Zusammenführungseinrichtung 20 ein.

Die Vorrichtung 10 weist Seitenbeeinflussungseinrichtungen auf, die jeweils stromaufwärts der Zusammenführungseinrichtung 20 und in Linie mit der ersten Gießmaschine 12 bzw. mit der zweiten Gießmaschine 18 angeordnet sind. Diese Seitenbeeinflussungseinrichtungen sind in der Darstellung von Fig. 3 lediglich symbolisch durch das Bezugszeichen "28" angedeutet, und können beispielsweise durch Führungslineale ausgebildet sein. Entsprechend werden die Brammen 16 und 22 durch diese Führungslineale seitlich geführt und dadurch relativ zueinander ausgerichtet. An dieser Stelle wird gesondert darauf hingewiesen, dass diese Seitenbeeinflussungseinrichtungen 28 auch innerhalb der Zusammenführungseinrichtung 20 angeordnet, und somit als Teil dieser Zusammenführungseinrichtung 20 ausgebildet sein können.

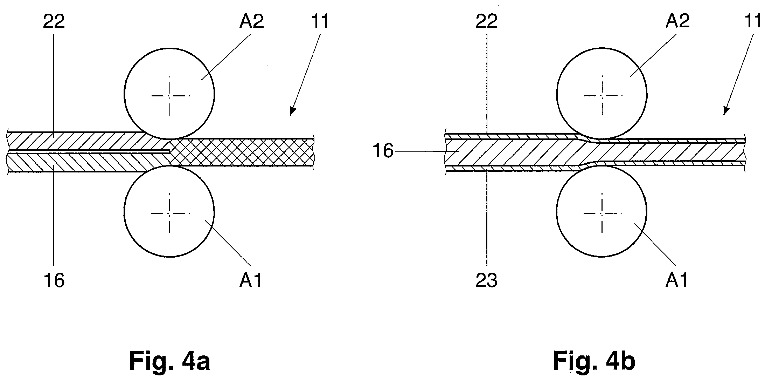

Die vorstehend bereits genannte Walzplattierungseinrichtung 14.1 dient dem Zweck, ein Warmwalzen für die zumindest zwei Brammen 16 und 22 durchzuführen und somit hieraus mittels Walzplattieren ein kontinuierliches bandförmiges Verbundmaterial 11 zu erzeugen. Die Seitenansicht von Fig. 4a zeigt prinzipiell vereinfacht ein zweilagiges Walzschweißen von zwei Materialpartnern, die z.B. aus den zumindest beiden Brammen 16 und 22 bestehen können, wenn sie mit den Arbeitswalzen A1, A2 der Walzplattierungseinrichtung 14.1 in Kontakt gelangen und zwischen diesen Arbeitswalzen A1, A2 hindurchgeführt werden. Aus der Seitenansicht von Fig. 3 ist ersichtlich, dass von den beiden zusammengeführten Brammen 16 und 22, wenn sie gemeinsam in die Walzplattierungseinrichtung 14.1 einlaufen, ein Verbund gebildet wird, der dann von den Arbeitswalzen A1, A2 der Walzplattierungseinrichtung warmgewalzt bzw. walzplattiert wird.

Im Anschluss an die Walzplattierungseinrichtung 14.1 bzw. stromabwärts hiervon können weitere Walzgerüste bzw. Walzplattierungseinrichtungen vorgesehen sein, mit denen ein Warmwalzen für das bandförmige Verbundmaterial 11 durchgeführt wird. In der Fig. 1 ist durch das Bezugszeichen "14.i" angedeutet, dass stromabwärts der Walzplattierungseinrichtung 14.1 zumindest eine weitere Walzplattierungseinrichtung oder mehrere solcher Walzgerüste in der Walzstraße angeordnet sein können. Des Weiteren können im Anschluss an die Walzplattierungseinrichtungen 14.i weitere Walzgerüste in der Walzstraße 15 vorgesehen sein.

Die Vorrichtung 10 umfasst - ausweislich der Darstellung in Fig. 3 - eine Reinigungseinrichtung in Form einer Entzunderungseinrichtung 30, die stromaufwärts der Zusammenführungseinrichtung 20 angeordnet ist. Durch diese Entzunderungseinrichtung 30 werden die Brammen 16 und 22 geeignet entzundert, was insbesondere dann von Vorteil ist, wenn zumindest eine der Brammen, oder beide Brammen, (jeweils) aus Stahl oder aus einer Stahl-Legierung besteht/bestehen. Des Weiteren verdeutlicht die Seitenansicht von Fig. 3, dass die Vorrichtung 10 eine Schutzgas-Einrichtung 32 umfasst, die in die Zusammenführungseinrichtung 20 integriert ist. In der Darstellung von Fig. 3 ist die Schutzgas-Einrichtung 32 lediglich vereinfacht durch gestrichelte Linien symbolisiert. Die Brammen 16 und 22 werden, bevor sie durch die Walzplattierungseinrichtung 14.1 mittels Warmwalzen bzw. Walzplattieren miteinander verbunden werden, durch die Schutzgas-Einrichtung 32 hindurchgeführt, was die Bildung von "frischem" Zunder auf den einander gegenüberliegenden Oberflächen der Brammen 16 und 22 wirkungsvoll verhindert.

Das Verbinden der zumindest zwei Brammen 16 und 22 mittels des Warmwalzens in Schritt (iii) kann weiter dadurch verbessert werden, dass eine Oberflächentemperatur der Brammen 16, 22 an ihren jeweils gegenüberliegenden Seiten beeinflusst, vorzugsweise erhöht wird. Zu diesem Zweck ist unmittelbar stromaufwärts der Walzplattierungseinrichtung 14.1 eine Temperaturbeeinflussungseinrichtung 34 angeordnet, die in der Darstellung von Fig. 3 symbolisch vereinfacht gezeigt ist.

Die Vorrichtung umfasst des Weiteren zumindest eine Messeinrichtung 36, mit der die innere Materialbeschaffenheit, insbesondere die Verbindungsqualität des kontinuierlichen bandförmigen Verbundmaterials 11, das mittels Warmwalzen durch die Walzplattierungseinrichtung 14.1 erzeugt worden ist, erfasst werden kann. Die Messeinrichtung 36 ist z.B. hinter bzw. stromabwärts der Walzplattierungseinrichtung 14.1 angeordnet, und funktioniert vorzugsweise nach dem Prinzip Röntgen und/oder Ultraschall. Hierzu kann vorgesehen sein, zugehörige Sensoren der Messeinrichtung 36 oberhalb und/oder unterhalb des kontinuierlichen bandförmigen Verbundmaterials 11 anzuordnen, so dass damit eine Oberseite und/oder eine Unterseite des Metallbands in Form dieses Verbundmaterials 11 hinsichtlich seiner Materialbeschaffenheit bzw. Oberflächenqualität untersucht werden kann.

Bei der Ausführungsform von Fig. 1 sind die Gießmaschinen 12, 18 jeweils in Form einer Bogen-Stranggieß-Einrichtung ausgebildet.

An verschiedenen Stellen entlang der Strangführung sind Trenneinrichtungen 38, z.B. in Form von Brennschneideinrichtungen, Pendel- oder Trommelscheren oder dergleichen, angeordnet. Diese Trenneinrichtungen 38 ermöglichen ein Herausschneiden bzw. Austragen von nicht verwertbarem Material. Ergänzend und/oder alternativ kann mit Einsatz dieser Trenneinrichtungen 38 auch ein diskontinuierlicher Walzbetrieb von Einzelbändern und/oder ein Notfall-Betrieb mit nur einer der Gießmaschinen 12, 18 realisiert werden. Das Trennen kann auch mit dem Ziel der Verbesserung der nachfolgenden Prozessschritte und/oder zur Erzeugung der Längen des in dieser Anlage erzeugten Endproduktes erfolgen. Diesbezüglich wird darauf hingewiesen, dass die in den Fig. 1 und 2 gezeigten Positionen der jeweiligen Trenneinrichtungen 38 lediglich beispielhaft zu verstehen sind.

Am Ende der Walzstraße 15 ist zumindest eine Haspel 40 vorgesehen, um das erzeugte kontinuierliche bandförmige Verbundmaterial 11 zu einem Coil aufzuwickeln. Zweckmäßigerweise kann auch eine Mehrzahl von solchen Haspeln 40 vorgesehen sein, mit entsprechenden (nicht gezeigten) Einrichtungen für ein Umschalten zwischen den einzelnen Haspeln 40. Ergänzend und/oder alternativ kann am Ende der Walzstrasse 15 auch zumindest eine Ablage oder dergleichen vorgesehen sein, um davon Bleche bzw. Grobbleche zu entnehmen.

Fig. 2 zeigt eine Seitenansicht der erfindungsgemäßen Vorrichtung 10 nach einer weiteren Ausführungsform. Hierbei sind gleiche Merkmale im Vergleich zur Ausführungsform von Fig. 1 mit jeweils gleichen Bezugszeichen versehen. Die Ausführungsform von Fig. 2 unterscheidet sich von der Fig. 1 dadurch, dass die Gießmaschinen 12, 18 jeweils nach Art einer Senkrecht-Stranggieß-Einrichtung ausgebildet sind, wobei die hierdurch erzeugten Stränge 13, 19 senkrecht nach unten in ein Strangführungssystem mit Kühlung eintreten.

Es wird gesondert darauf hingewiesen, dass die alternative Zusammenführungseinrichtung 20 gemäß Fig. 3 auch bei der Ausführungsform von Fig. 2 eingesetzt werden kann. Im Übrigen entspricht die Funktionsweise der Ausführungsform gemäß Fig. 2 jener von Figur 1, so dass zur Vermeidung von Wiederholungen auf die Erläuterungen zu Fig. 1 verwiesen werden darf.

Ergänzend zu den Ausführungsformen gemäß Fig. 1 und Fig. 2 kann vorgesehen sein, dass die Vorrichtung eine (nicht dargestellte) dritte Gießmaschine aufweist. Mit einer solchen dritten Gießmaschine wird ein weiterer kontinuierlicher Strang erzeugt, aus dem sich eine weitere Bramme 23 (vgl. Fig. 4b) bilden kann. Diese dritte Gießmaschine kann in Linie mit der Walzplattierungseinrichtung 14.1 angeordnet sein. Ein Warmwalzen bzw. Walzplattieren von insgesamt drei Lagen, die aus den drei Brammen 16, 22 und 23 bestehen können ist prinzipiell vereinfacht in der Seitenansicht von Fig. 4b veranschaulicht. Hierbei können die beiden äußeren Brammen 22, 23 jeweils als Plattierungswerkstoff dienen, der im Vergleich zum Grundwerkstoff in Form der mittigen Bramme 16 aus einem Material bzw. einer anderen Material- bzw. Stahlgüte bestehen kann.

Mit den vorstehend erläuterten Ausführungsformen der erfindungsgemäßen Vorrichtung 10 gemäß Fig. 1 und Fig. 2 kann das erfindungsgemäße Verfahren zur Herstellung des kontinuierlichen bandförmigen Verbundmaterials 11 durchgeführt werden. Dieses Verfahren kann in Abhängigkeit von zumindest einer der eingangs genannten Prozessgrößen automatisch, und vorzugsweise geregelt, durchgeführt werden.

### Bezugszeichenliste

- 10: Vorrichtung
- 11: kontinuierliches bandförmiges Verbundmaterial
- 12: erste Gießmaschine
- 13: kontinuierlicher Strang (erzeugt durch die erste Gießmaschine 12)
- 14.1: Walzplattierungseinrichtung
- 14.i: (weitere) Walzplattierungseinrichtung(en)
- 15: Walzstrasse
- 16: Bramme (gebildet aus dem Strang 13)
- 18: zweite Gießmaschine
- 19: kontinuierlicher Strang (erzeugt durch die zweite Gießmaschine 18)
- 20: Zusammenführungseinrichtung
- 22: Bramme (gebildet aus dem Strang 19)
- 23: Bramme (gebildet aus einem Strang, der mit einer dritten Gießmaschine erzeugt wird)
- 24: erstes Ausgleichswalzgerüst
- 25: zweites Ausgleichswalzgerüst
- 26: erste Erwärmungseinrichtung (z.B. Induktionsheizung)
- 27: zweite Erwärmungseinrichtung (z.B. Induktionsheizung)
- 28: Seitenbeeinflussungseinrichtung (z.B. Führungslineal)
- 30: Reinigungseinrichtung (z. B. Entzunderungseinrichtung)
- 32: Schutzgas-Einrichtung
- 34: Temperaturbeeinflussungseinrichtung
- 36: Messeinrichtung
- 38: Trenneinrichtung (z.B. Trommelschere)
- 40: Haspel
- A1, A2: Arbeitswalzen (der Walzplattierungseinrichtung 14.1)
- T: Transportrichtung (für das bandförmige Verbundmaterial 11)

## Patentansprüche

1. Verfahren zur Herstellung eines kontinuierlichen bandförmigen Verbundmaterials (11), aufweisend die Schritte:
Erzeugen zumindest eines kontinuierlichen Strangs (13) aus Stahl oder aus einer Stahl-Legierung durch eine erste Gießmaschine (12), und
Warmwalzen einer Bramme (16), die sich durch Erstarren des Strangs (13) gebildet hat, und
(i) Erzeugen zumindest eines weiteren kontinuierlichen Strangs (19) aus Stahl oder aus einer Stahl-Legierung durch zumindest eine zweite Gießmaschine (18),
(ii) Zusammenführen von Brammen (16, 22), die sich aus den Strängen (13, 19), die durch die erste Gießmaschine (12) und durch die zweite Gießmaschine (18) erzeugt worden sind, durch Erstarren gebildet haben, im warmen Zustand, bei dem diese Brammen (16, 22) jeweils eine Temperatur von zumindest 720°C aufweisen, und
(iii) Warmwalzen eines Verbunds gebildet aus den zusammengeführten Brammen (16, 22) so dass damit durch Walzplattieren ein einziges kontinuierliches bandförmiges Verbundmaterial (11) entsteht,
wobei beide Brammen (16, 22) gebildet aus den mit der ersten/zweiten Gießmaschine (12, 18) erzeugten Strängen (13, 19) vor dem Schritt (iii) mittels einer Induktionsheizung (34) erwärmt werden, um die Temperatur der Brammen (16, 22) gezielt zu beeinflussen und an die Temperatur der jeweils anderen Bramme (22, 16) anzupassen.

2. Verfahren nach Anspruch 1, **dadurch gekennzeichnet, dass** vor dem Schritt (ii) eine Geschwindigkeit zumindest einer aus den mit der ersten/zweiten Gießmaschine (12, 18) erzeugten Strängen (13,19) durch Erstarren gebildeten Bramme (16, 22) gesteuert, vorzugsweise geregelt wird, vorzugsweise, dass zumindest eine Bramme (16, 22) durch ein Ausgleichswalzgerüst (24; 25) hindurchgeführt wird, mit dem die Geschwindigkeit dieser Bramme (16, 22) steuerbar, vorzugsweise regelbar ist.

3. Verfahren nach Anspruch 1 oder 2, **dadurch gekennzeichnet, dass** zumindest eine Bramme (16, 22), vorzugsweise beide Brammen (16, 22) gebildet aus den mit der ersten/zweiten Gießmaschine (12, 18) erzeugten Strängen (13, 19) vor dem Schritt (ii) erwärmt wird bzw. werden, um die Temperatur dieser Bramme (16, 22) gezielt zu beeinflussen und an die Temperatur der jeweils anderen Bramme (22, 16) anzupassen, vorzugsweise, dass eine Erwärmung mittels einer Induktionsheizung durchgeführt wird.

4. Verfahren nach einem der vorhergehenden Ansprüche, **dadurch gekennzeichnet, dass** vor dem Schritt (ii) und/oder während des Schritts (ii) und/oder vor dem Schritt (iii) die aus den mit der ersten/zweiten Gießmaschine (12, 18) erzeugten Strängen (13,19) durch Erstarren gebildeten Brammen (16, 22) seitlich geführt werden, um dadurch die Brammen relativ zueinander auszurichten, vorzugsweise, dass zur seitlichen Führung zumindest eine Seitenbeeinflussungseinrichtung (28) in Form eines Führungslineals vorgesehen ist, das durch einen Aktuator insbesondere mit einer vorbestimmten Kraft in Richtung der Bandmitte bewegt wird.

5. Verfahren nach einem der vorhergehenden Ansprüche, **dadurch gekennzeichnet, dass** zumindest eine aus den mit der ersten/zweiten Gießmaschine (12, 18) erzeugten Strängen (13,19) durch Erstarren gebildeten Bramme (16, 22) vor dem Schritt (ii) gereinigt, vorzugsweise entzundert werden.

6. Verfahren nach einem der vorhergehenden Ansprüche, **dadurch gekennzeichnet, dass** vor dem Schritt (ii) und/oder während des Schritts (ii) und/oder vor dem Schritt (iii) und/oder während des Schritts (iii) die aus den Strängen (13,19) durch Erstarren gebildeten Brammen (16, 22) in einer Schutzgas-Atmosphäre geführt werden.

7. Verfahren nach einem der vorhergehenden Ansprüche, **dadurch gekennzeichnet, dass** vor dem Schritt (iii) eine Oberflächentemperatur zumindest einer aus den Strängen (13,19) gebildeten Bramme (16, 22) an einer Seite, die der jeweils anderen Bramme (22, 16) gegenüberliegt, verändert, insbesondere erhöht wird.

8. Verfahren nach einem der vorhergehenden Ansprüche, **dadurch gekennzeichnet, dass** im Anschluss an den Schritt (iii) eine Materialbeschaffenheit des erzeugten einzigen kontinuierlichen bandförmigen Verbundmaterials (11) insbesondere durch Röntgen und/oder Ultraschall erfasst wird, vorzugsweise, dass auf Grundlage der erfassten Materialbeschaffenheit durch eine Steuereinrichtung ein Prozesssignal erzeugt wird, mit dem für das Verfahren ein Regelkreis gebildet wird.

9. Verfahren nach einem der vorhergehenden Ansprüche, **dadurch gekennzeichnet, dass** dieses Verfahren automatisch in Abhängigkeit von zumindest einer vorbestimmten Prozessgröße durchgeführt wird, vorzugsweise, dass diese Prozessgröße gewählt ist aus der Gruppe gebildet aus insbesondere der Gießgeschwindigkeit der ersten/zweiten Gießmaschine (12, 18), einer Änderung der Liquid-Core-Reduction der mit den Gießmaschinen (12,18) erzeugten Stränge (13,19), der vor dem Schritt (ii) vorliegenden Geschwindigkeit der aus den Strängen (13,19) durch Erstarren gebildeten Brammen (16, 22), einem Temperaturunterschied der einzelnen Brammen (16, 22) vor dem Schritt (ii) und/oder vor dem Schritt (iii), einer jeweiligen Geschwindigkeit der Arbeitswalzen (A1, A2) der Walzplattierungseinrichtung (14.1), der erfassten Materialbeschaffenheit des erzeugten einzigen kontinuierlichen bandförmigen Verbundmaterials (11) und/oder einer in Schritt (iii) erzielten Dickenreduzierung des erzeugten einzigen bandförmigen Verbundmaterials (11).

10. Verfahren nach einem der vorhergehenden Ansprüche, **dadurch gekennzeichnet, dass** die mit der ersten und zweiten Gießmaschine (12, 18) erzeugten Stränge (13, 19) aus jeweils unterschiedlichen Materialgüten, insbesondere aus unterschiedlichen Stahlgüten bestehen, vorzugsweise, dass in Schritt (i) ein weiterer kontinuierlicher Strang durch eine dritte Gießmaschine erzeugt wird, wobei die anschließenden Schritte (ii) und (iii) mit insgesamt drei Brammen, die sich aus den mit der ersten, zweiten und dritten Gießmaschine erzeugten Strängen jeweils durch Erstarren gebildet haben, durchgeführt werden.

11. Verfahren nach Anspruch 10, **dadurch gekennzeichnet, dass** die Bramme, die sich durch Erstarren aus dem mit der dritten Gießmaschine erzeugten Strang gebildet hat, mit dem in Schritt (iii) bereits gebildeten einzigen kontinuierlichen bandförmigen Verbundmaterial (11) im warmen Zustand mit erneuter Durchführung der Schritte (ii) und (iii) verbunden wird.

12. Verfahren nach einem der vorhergehenden Ansprüche, **dadurch gekennzeichnet, dass** zwischen die zusammenzuführenden Brammen zumindest eine Zwischenschicht in fester, flüssiger oder pulverisierter Form eingebracht wird, welche die einander gegenüberliegenden Oberflächen der Brammen passiviert oder aktiviert.

13. Vorrichtung (10) zur Herstellung eines kontinuierlichen bandförmigen Verbundmaterials (11), umfassend
zumindest eine erste Gießmaschine (12), mit der ein kontinuierlicher Strang (13) insbesondere aus Stahl erzeugt wird,
zumindest ein Walzgerüst, das in Linie mit der ersten Gießmaschine (12) und stromabwärts hiervon angeordnet ist, wobei eine durcherstarrte Bramme (16) des mit der ersten Gießmaschine (12) erzeugten Strangs (13) warmwalzbar ist,
wobei
zumindest eine zweite Gießmaschine (18) vorgesehen ist, mit der ein weiterer kontinuierlicher Strang (19) aus Metall erzeugt wird, wobei diese zweite Gießmaschine (18) in Linie mit dem Walzgerüst und stromaufwärts hiervon angeordnet ist,
wobei zwischen einerseits den Gießmaschinen (12,18) und andererseits dem Walzgerüst eine Zusammenführungseinrichtung (20) angeordnet ist, mittels der eine Bramme (16), die sich aus einem mit der ersten Gießmaschine erzeugten Strang (13) durch Erstarren gebildet hat, und eine Bramme (22), die sich aus einem mit der zweiten Gießmaschine (18) erzeugten Strang (19) durch Erstarren gebildet hat, im warmen Zustand in Richtung zueinander bringbar sind,
und wobei das Walzgerüst als Walzplattierungseinrichtung (14.1) ausgebildet ist, mittels der ein Verbund gebildet aus den zusammengeführten Brammen (16, 22) warmwalzbar ist, so dass damit durch Walzplattieren ein einziges kontinuierliches bandförmiges Verbundmaterial (11) entsteht, **dadurch gekennzeichnet,**
**dass** zwischen der Zusammenführungseinrichtung (20) und einer unmittelbar stromabwärts davon angeordneten Walzplattierungseinrichtung (14.1) zumindest eine Temperaturbeeinflussungseinrichtung (34) in Form einer Induktionsheizung vorgesehen ist, mittels der die Oberflächentemperatur zumindest einer aus den Strängen (13,19) gebildeten Bramme (16, 22) an einer Seite, die der jeweils anderen Bramme (22, 16) gegenüberliegt, beeinflussbar ist.

14. Vorrichtung (10) nach Anspruch 13, **dadurch gekennzeichnet,**
**dass** ein erstes Ausgleichswalzgerüst (24) vorgesehen ist, das in Linie zwischen der ersten Gießmaschine und der Zusammenführungseinrichtung (20) angeordnet ist, und/oder
**dass** ein zweites Ausgleichswalzgerüst (25) vorgesehen ist, das in Linie zwischen der zweiten Gießmaschine und der Zusammenführungseinrichtung (20) angeordnet ist.

15. Vorrichtung (10) nach Anspruch 13 oder 14, **dadurch gekennzeichnet, dass** stromaufwärts der Zusammenführungseinrichtung (20) und/oder als Teil hiervon zumindest eine Erwärmungseinrichtung (26; 27) vorgesehen ist, wobei die Bramme (16), die sich aus einem mit der ersten Gießmaschine (12) erzeugten Strang (13) durch Erstarren gebildet hat, und/oder die Bramme (22), die sich aus einem mit der zweiten Gießmaschine (18) erzeugten Strang (19) durch Erstarren gebildet hat, durch diese Erwärmungseinrichtung (26; 27) hindurch geführt ist bzw. sind, vorzugsweise, dass die zumindest eine Erwärmungseinrichtung (26, 27) nach dem Prinzip einer Induktionsheizung funktioniert, weiter vorzugsweise, dass pro Bramme (16, 22) jeweils eine separate Erwärmungseinrichtung (26; 27) vorgesehen ist.

16. Vorrichtung (10) nach einem der Ansprüche 13-15, **dadurch gekennzeichnet, dass** zumindest eine Seitenbeeinflussungseinrichtung (28) vorgesehen ist, die stromaufwärts der Zusammenführungseinrichtung (20) und/oder als Teil dessen und/oder stromaufwärts der Walzplattierungseinrichtung (14.1) angeordnet ist, wobei die aus den mit der ersten/zweiten Gießmaschine (12, 18) erzeugten Strängen (13,19) gebildeten Brammen (16, 22) an ihren Seitenrändern in Kontakt mit der Seitenbeeinflussungseinrichtung (28) bringbar sind, um seitlich zueinander ausgerichtet zu werden, vorzugsweise, dass die zumindest eine Seitenbeeinflussungseinrichtung (28) in Form eines Führungslineals ausgebildet ist, das insbesondere mit einer vorbestimmten Kraft in Richtung der Bandmitte bewegbar ist.

17. Vorrichtung (10) nach einem der Ansprüche 13-16, **dadurch gekennzeichnet, dass** zwischen den Gießmaschinen (12,18) und der Zusammenführungseinrichtung (20) zumindest eine Reinigungseinrichtung (30), vorzugsweise eine Entzunderungseinrichtung angeordnet ist, mittels der zumindest eine aus den mit den Gießmaschinen (12,18) erzeugten Strängen (13,19) durch Erstarren gebildete Bramme (16, 22) reinigbar, vorzugsweise entzunderbar ist.

18. Vorrichtung (10) nach einem der Ansprüche 13-17, **gekennzeichnet durch** eine Schutzgas-Einrichtung (32), die vor der Zusammenführungseinrichtung (20) und/oder als Teil der Zusammenführungseinrichtung (20) und/oder als Teil einer stromabwärts unmittelbar angrenzend an die Zusammenführungseinrichtung (20) angeordneten Walzplattierungseinrichtung (14.1) vorgesehen ist, wobei zumindest eine aus den Strängen (13,19) gebildete Bramme (16, 22), vorzugsweise beide Brammen (16, 22), innerhalb dieser Schutzgas-Einrichtung (32) in einer Schutzgas-Atmosphäre geführt ist/sind.

19. Vorrichtung (10) nach einem der Ansprüche 13-18, **dadurch gekennzeichnet, dass** stromabwärts einer Walzplattierungseinrichtung (14.1) eine Messeinrichtung (36) vorgesehen ist, mittels der eine Materialbeschaffenheit des erzeugten einzigen kontinuierlichen bandförmigen Verbundmaterials (11) insbesondere durch Röntgen und/oder Ultraschall erfassbar ist.

20. Vorrichtung (10) nach einem der Ansprüche 13-19, **dadurch**
**gekennzeichnet, dass** zumindest eine dritte Gießmaschine vorgesehen ist, mit der ein weiterer kontinuierlicher Strang erzeugt wird, wobei diese dritte Gießmaschine in Linie mit der Walzplattierungseinrichtung (14.1) angeordnet ist.

## Claims

1. Method of producing a continuous strip-shaped composite material (11), comprising the steps of:
producing at least one continuous strip (13) of steel or a steel alloy by a first casting machine (12) and
hot-rolling a slab (16) which has formed through hardening of the strip (13), and
(i) producing at least one further continuous strip (19) of steel or a steel alloy by at least second casting machine (18),
(ii) bringing together slabs (16, 22), which have formed by hardening from the strips (13, 19) produced by the first casting machine (12) and the second casting machine (18), in hot state in which these slabs (16, 22) each have a temperature of at least 720° C, and
(iii) hot-rolling of composite formed from the brought-together slabs (16, 22) so that a single continuous strip-shaped composite material (11) thus arises through roll-bonding, wherein the two slabs (16, 22) formed from the strips (13, 19) produced by the first/second casting machine (12, 18) are heated by way of induction heating means (34) prior to the step (iii) so as to selectively influence the temperature of the slabs (16, 22) and adapt it to the temperature of the respective other slab (22, 16).

2. Method according to claim 1, **characterised in that** prior to the step (ii) a speed of at least one slab (16, 22) formed by hardening from the strips (13, 19) produced by the first/second casting machine (12, 18) is controlled, preferably regulated, preferably **in that** at least one slab (16, 22) is led through a compensating roll stand (24; 25) by which the speed of this slab (16, 22) can be controlled, preferably regulated.

3. Method according to claim 1 or 2, **characterised in that** at least one slab (16, 22), preferably both slabs (16, 22), formed from the strips (13, 19) produced by the first/second casting machine (12, 18) is or are heated prior to the step (ii) so as to selectively influence the temperature of the slab (16, 22) and adapt it to the temperature of the respective other slab (22, 16), preferably **in that** heating is carried out by way of induction heating means.

4. Method according to any one of the preceding claims, **characterised in that** prior to the step (ii) and/or during the step (ii) and/or prior to the step (iii) the slabs (16, 22) formed by hardening from the strips (13, 19) produced by the first/second casting machine (12, 18) are laterally guided so as to thereby align the slabs relative to one another, preferably **in that** for lateral guidance at least one side influencing device (28) in the form of a guidance straight guide, which is moved in the direction of the strip centre by an actuator with, in particular, a predetermined force, is provided.

5. Method according to any one of the preceding claims, **characterised in that** at least one slab (16, 22) formed by hardening from the strips (13, 19) produced by the first/second casting machine (12, 18) is cleaned, preferably descaled, prior to the step (ii).

6. Method according to any one of the preceding claims, **characterised in that** prior to the step (ii) and/or during the step (ii) and/or prior to the step (iii) and/or during the step (iii) the slabs (16, 22) formed by hardening from the strips (13, 19) are guided in a protective gas atmosphere.

7. Method according to any one of the preceding claims, **characterised in that** prior to the step (iii) a surface temperature of at least one slab (16, 22) formed from the strips (13, 19) at a side opposite the respective other slab (22, 16) is changed, in particular increased.

8. Method according to any one oaf the preceding claims, **characterised in that** subsequently to the step (iii) a material property of the produced single continuous strip-shaped composite material (11) is detected by, in particular, X-rays and/or ultrasound, preferably **in that** on the basis of the detected material property a process signal, by which a regulating loop for the method is formed, is generated by a control device.

9. Method according to any one of the preceding claims, **characterised in that** this method is carried out automatically in dependence on at least one predetermined process variable, preferably **in that** this process variable is selected from the group formed from, in particular, the casting speed of the first/second casting machine (12, 18), a change in the liquid-core reduction of the strips (13, 19) produced by the casting machines (12, 18), the speed, which is present prior to the step (ii), of the slabs (16, 22) formed by hardening from the strips (13, 19), a temperature difference of the individual slabs (16, 22) prior to the step (ii) and/or prior to the step (iii), a respective speed of the work rolls (A1, A2) of the roll-bonding device (14.1), the detected material property of the produced single continuous strip-shaped composite material (11) and/or a thickness reduction, which is achieved in step (iii), of the produced single strip-shaped composite material (11).

10. Method according to any one of the preceding claims, **characterised in that** the strips (13, 19) produced by the first and second casting machines (12, 18) consist of respectively different material qualities, particularly of different steel qualities, preferably **in that** in step (i) a further continuous strip is produced by a third casting machine, wherein the subsequent steps (ii) and (iii) are carried out with, in total, three slabs respectively formed by hardening from the strips produced by the first, second and third casting machines.

11. Method according to claim 10, **characterised in that** the slab formed through hardening from the strip produced by the third casting machine is connected with the single continuous strip-shaped composite material (11), which is already formed in step (iii), in hot state by repeated performance of the steps (ii) and (iii).

12. Method according to any one of the preceding claims, **characterised in that** at least one intermediate layer in solid, liquid or powdered form is introduced between the brought-together slabs and passivates or activates the mutually opposite surfaces of the slabs.

13. Device (10) for producing a continuous strip-shaped composite material (11), comprising
at least one first casting machine (12), by which a continuous strip (13), particularly of steel, is produced,
at least one roll stand which is arranged in line with the first casting machine (12) and downstream thereof, wherein a slab (16), which has been hardened through, of the strip (13) produced by the first casting machine (12) can be hot rolled,
wherein
at least one second casting machine (18), by which a further continuous strip (19) of metal is produced, is provided, wherein this second casting machine (18) is arranged in line with the roll stand and upstream thereof,
wherein
arranged between on the one hand the casting machines (12, 18) and on the other hand the roll stand is a device (20) for bringing together, by means of which a slab (16) formed by hardening from a strip (13) produced by the first casting machine and a slab (22) formed by hardening from a strip (19) produced by the second casting machine (18) can be brought in hot state in direction towards one another,
and wherein
the roll stand is constructed as a roll-bonding device (14.1), by means of which a composite formed from the brought-together slabs (16, 22) can be hot-rolled so that a single continuous strip-shaped composite material (11) thus arises through roll-bonding,
**characterised in that**
provided between the device (20) for bringing together and a roll-bonding device (14.1) arranged directly downstream thereof is at least one temperature influencing device (34) in the form of induction heating means, by way of which the surface temperature of at least one slab (16, 22), which is formed from the strips (13, 19), at a side opposite the respective other slab (22, 16) can be influenced.

14. Device (10) according to claim 13, **characterised in that** a first compensating roll stand (24) arranged in line between the first casting machine and the device (20) for bringing together is provided and/or a second compensating roll stand (25) arranged in line between the second casing machine and the device (20) for bringing together is provided.

15. Device (10) according to claim 13 or 14, **characterised in that** at least one heating device (26, 27) is provided upstream of the device (20) for bringing together and/or as part thereof, wherein the slab (16) formed by hardening from a strip (13) produced by the first casing machine (12) and/or the slab (22) formed by hardening from a strip (19) produced by the second casting machine (18) is or are led through this heating device (26; 27), preferably **in that** the at least one heating device (26, 27) functions according to the principle of induction heating, more preferably **in that** a respective separate heating device (26; 27) is provided per slab (16, 22).

16. Device (10) according to any one of claims 13 to 15, **characterised in that** at least one side influencing device (28) arranged upstream of the device (20) for bringing together and/or as part thereof and/or upstream of the roll-bonding device (14.1) is provided, wherein the slabs (16, 22) formed from the strips (13, 19) produced by the first/second casting machine (12, 18) can be brought at the side edges thereof into contact with the at least one side influencing device (28) so as to be laterally aligned with one another, preferably **in that** the at least one side influencing device (28) is constructed in the form of a guidance straight guide, which is movable in the direction of the strip centre with, in particular, a predetermined force.

17. Device (10) according to any one of claims 13 to 16, **characterised in that** arranged between the casting machines (12, 18) and the device (20) for bringing together is at least one cleaning device (30), preferably a descaling device, by means of which the at least one slab (16, 22) formed by hardening from the strips (13, 19) produced by the casting machines (12, 18) can be cleaned, preferably descaled.

18. Device (10) according to any one of claims 13 to 17, **characterised by** a protective gas device (32) which is provided in front of the device (20) for bringing together and/or as part of the device (20) for bringing together and/or as part of a roll-bonding device (14.1) arranged downstream of and directly adjacent to the device (20) for bringing together, wherein at least one slab (16, 22), preferably both slabs (16, 22), formed from the strips (13, 19) is or are guided within this protective gas device (32) in a protective gas atmosphere.

19. Device (10) according to any one of claims 13 to 18, **characterised in that** a measuring device (36) by means of which a material property of the produced single continuous strip-shaped composite material (11) is detectable by, in particular, X-rays and/or ultrasound is provided downstream of a roll-bonding device (14.1).

20. Device (10) according to any one of claims 13 to 19, **characterised in that** at least one third casting machine by which a further continuous strip is produced is provided, wherein this third casting machine is arranged in line with the roll-bonding device (14.1)

## Revendications

1. Procédé pour la fabrication d'une matière composite continue (11) sous la forme d'une bande, présentant les étapes dans lesquelles :
on produit au moins une barre continue (13) en acier ou en un alliage à base d'acier par l'intermédiaire d'une première machine de coulée (12) ; et
on soumet à un laminage à chaud, une brame (16) que l'on a obtenue par solidification de la barre (13) ; et
(i) on produit au moins une barre continue supplémentaire (19) en acier ou en un alliage à base d'acier par l'intermédiaire d'au moins une deuxième machine de coulée (18) ;
(ii) on guide de manière conjointe des brames (16, 22) qui ont été obtenues par solidification à partir des barres (13, 19) qui ont été produites par l'intermédiaire de la première machine de coulée (12) et par l'intermédiaire de la deuxième machine de coulée (18), à l'état chaud, dans lequel ces brames (16, 22) présentent respectivement une température d'au moins 720 °C ; et
(iii) on soumet à un laminage à chaud, un composite que l'on obtient à partir des brames (16, 22) guidées de manière conjointe, d'une manière telle que, par l'intermédiaire d'un placage à chaud, on obtient une matière composite continue unique (11) sous la forme d'une bande ;
dans lequel on chauffe les deux brames (16, 22) que l'on a obtenues à partir des barres (13, 19) produites par l'intermédiaire des première/deuxième machines de coulée (12, 18), avant l'étape (iii), au moyen d'un chauffage (34) du type à induction, dans le but d'influencer de manière ciblée la température de la brame (16, 22) et d'adapter cette température à la température de l'autre brame respective (22, 16).

2. Procédé selon la revendication 1, **caractérisé en ce que**, avant l'étape (ii), on commande, de préférence on règle une vitesse d'au moins une des brames (16, 22) que l'on a obtenues par solidification à partir des barres (13, 19) produites par l'intermédiaire des première/deuxième machines de coulée (12, 18) ; de préférence **en ce que** l'on guide au moins une brame (16, 22) à travers une cage de laminoir de compensation (24; 25), avec laquelle on peut commander, de préférence on peut régler la vitesse de ces brames (16, 22).

3. Procédé selon la revendication 1 ou 2, **caractérisé en ce que** l'on chauffe au moins une brame (16, 22), de préférence les deux brames (16, 22) que l'on a obtenues par solidification à partir des barres (13, 19) produites par l'intermédiaire des première/deuxième machines de coulée (12, 18), avant l'étape (ii), dans le but d'influencer de manière ciblée la température de cette brame (16, 22) et de l'adapter à la température de l'autre brame respective (22, 16) ; de préférence **en ce qu'**on met en oeuvre un chauffage au moyen d'un chauffage du type à induction.

4. Procédé selon l'une quelconque des revendications précédentes, **caractérisé en ce que**, avant l'étape (ii) et/ou au cours de l'étape (ii) et/ou avant l'étape (iii), on soumet à un guidage latéral les brames (16, 22) que l'on a obtenues par solidification à partir des barres (13, 19) produites par l'intermédiaire des première/deuxième machines de coulée (12, 18), pour ainsi orienter les brames dans la direction l'une de l'autre ; de préférence, **en ce que**, pour le guidage latéral, on prévoit au moins un mécanisme (28) destiné à influencer les côtés, sous la forme d'une règle de guidage qui est mise en mouvement à l'intervention d'un actionneur, en particulier avec une force prédéterminée, dans la direction du milieu de la bande.

5. Procédé selon l'une quelconque des revendications précédentes, **caractérisé en ce que** l'on soumet au moins une des brames que l'on a obtenues par solidification à partir des barres (13, 19) produites par l'intermédiaire des première/deuxième machines de coulée (12, 18), avant l'étape (ii), à un nettoyage, de préférence à un décalaminage.

6. Procédé selon l'une quelconque des revendications précédentes, **caractérisé en ce que**, avant l'étape (ii) et/ou au cours de l'étape (ii) et/ou avant l'étape (iii) et/ou au cours de l'étape (iii), on guide les brames (16, 22) que l'on a obtenues par solidification à partir des barres (13, 19) dans une atmosphère d'un gaz de protection.

7. Procédé selon l'une quelconque des revendications précédentes, **caractérisé en ce que**, avant l'étape (iii), on modifie, en particulier on élève une température superficielle d'au moins une des brames (16, 22) que l'on a obtenues à partir des barres (13, 19) sur un côté qui est opposé à l'autre brame respective (22, 16).

8. Procédé selon l'une quelconque des revendications précédentes, **caractérisé en ce que**, dans la foulée de l'étape (iii), on enregistre une qualité matérielle de la matière composite continue unique (11) que l'on a obtenue sous la forme d'une bande, en particulier en faisant appel à des rayons X et/ou à des ultrasons ; de préférence, **en ce que**, sur base de la qualité matérielle enregistrée, on génère un signal de traitement par l'intermédiaire d'un mécanisme de commande, signal avec lequel on forme un circuit de réglage pour le procédé.

9. Procédé selon l'une quelconque des revendications précédentes, **caractérisé en ce que** ce procédé est mis en oeuvre de manière automatique en fonction d'au moins un paramètre de processus prédéterminé ; de préférence, **en ce que** ce paramètre de processus est choisi parmi le groupe formé en particulier par la vitesse de coulée des première/deuxième machines de coulée (12, 18), par une modification de la réduction de la partie centrale liquide des barres (13, 19) qui ont été produites avec les machines de coulée (12, 18), par la vitesse, en vigueur avant l'étape (ii), des brames (16, 22) que l'on a obtenues par solidification à partir des barres (13, 19), par une différence de température des brames individuelles (16, 22) avant l'étape (ii) et/ou avant l'étape (iii), par une vitesse respective des cylindres de travail (A1, A2) du mécanisme de placage par laminage (14.1), par la qualité matérielle enregistrée de la matière composite continue unique (11) que l'on a obtenue sous la forme d'une bande, et/ou par une réduction de l'épaisseur, que l'on a atteint à l'étape (iii), de la matière composite continue unique (11) que l'on a obtenue sous la forme d'une bande.

10. Procédé selon l'une quelconque des revendications précédentes, **caractérisé en ce que** les barres (13, 19) qui ont été produites avec la première et avec la deuxième machine de coulée (12, 18) sont constituées par des qualités de matière respectivement différentes, en particulier par des qualités d'acier différentes ; de préférence **en ce que**, à l'étape (i), on produit une barre continue supplémentaire par l'intermédiaire d'une troisième machine de coulée ; dans lequel on franchit les étapes (ii) et (iii) qui s'y raccordent avec au total trois brames que l'on a obtenues respectivement par solidification à partir des barres produites avec la première, la deuxième et la troisième machine de coulée.

11. Procédé selon la revendication 10, **caractérisé en ce qu'**on relie la brame que l'on a obtenue par solidification à partir de la barre produite avec la troisième machine de coulée, à la matière composite continue unique (11) que l'on a obtenue sous la forme d'une bande, déjà formée à l'étape (iii), à l'état chaud, en franchissant à nouveau les étapes (ii) et (iii).

12. Procédé selon l'une quelconque des revendications précédentes, **caractérisé en ce que**, entre les brames qui doivent être guidées de manière conjointe, on intercale au moins une couche intermédiaire sous une forme solide, liquide ou pulvérulente, qui déploie un effet de passivation ou d'activation sur les surfaces respectivement opposées des brames.

13. Dispositif (10) destiné à la fabrication d'une matière composite continue (11) sous la forme d'une bande, comprenant :
au moins une première machine de coulée (12) avec laquelle on produit une barre continue (13) en particulier en acier ;
au moins une cage de laminoir qui est disposée en ligne avec la première machine de coulée (12) et en aval par rapport à cette dernière ; dans lequel on peut soumettre à un laminage à chaud une brame complètement solidifiée (16) de la barre (13) qui a été produite avec la première machine de coulée (12) ;
dans lequel on prévoit au moins une deuxième machine de coulée (18) avec laquelle on produit une barre continue supplémentaire (19) constituée de métal; dans lequel cette deuxième machine de coulée (18) est disposée en ligne avec la cage de laminoir et en amont par rapport à cette dernière ;
dans lequel un mécanisme de guidage conjoint (20) est disposé entre d'une part les machines de coulée (12, 18) et d'autre part la cage de laminoir, mécanisme au moyen duquel on peut amener l'une vers l'autre, à l'état chaud, une des brames (16) que l'on a obtenue par solidification à partir d'une barre (13) qui a été produite avec la première machine de coulée et une brame (22) que l'on a obtenue par solidification à partir d'une barre (19) qui a été produite avec la deuxième machine de coulée (18) ; et
dans lequel la cage de laminoir est réalisée sous la forme d'un mécanisme de placage par laminage (14.1) au moyen duquel on peut soumettre à un laminage à chaud un composite que l'on obtient à partir des brames (16, 22) guidées de manière conjointe, d'une manière telle que, par l'intermédiaire d'un placage par laminage, on obtient une matière composite continue unique (11) sous la forme d'une bande ;
**caractérisé en ce que**, entre le mécanisme de guidage conjoint (20) et un mécanisme de placage par laminage (14.1) disposé directement en aval par rapport à ce dernier, on prévoit au moins un mécanisme (34) ayant une influence sur la température, sous la forme d'un chauffage du type à induction, au moyen duquel on peut influencer la température superficielle d'au moins une brame (16, 22) que l'on a obtenue à partir des barres (13, 19), sur un côté qui est opposé à l'autre brame respective (22, 16).

14. Dispositif (10) selon la revendication 13, **caractérisé en ce que** l'on prévoit une première cage de laminoir de compensation (24) qui est disposée en ligne entre la première machine de coulée et le mécanisme de guidage conjoint (20), et/ou **en ce que** l'on prévoit une deuxième cage de laminoir de compensation (25) qui est disposée en ligne entre la deuxième machine de coulée et le mécanisme de guidage conjoint (20).

15. Dispositif (10) selon la revendication 13 ou 14, **caractérisé en ce que** l'on prévoit, en amont du mécanisme de guidage conjoint (20) et/ou sous la forme d'une partie du mécanisme en question, au moins un mécanisme de chauffage (26 ; 27) ; dans lequel on guide, à travers la totalité de ce mécanisme de chauffage (26 ; 27), la brame (16) que l'on a obtenue par solidification à partir de la barre (13) qui a été produite avec la première machine de coulée (12) et/ou la brame (22) que l'on a obtenue par solidification à partir de la barre (19) qui a été produite avec la deuxième machine de coulée (18) ; de préférence **en ce que** ledit au moins un mécanisme de chauffage (26 ; 27) fonctionne conformément au principe d'un chauffage du type à induction ; de manière plus préférée, **en ce que** l'on prévoit par brame (16, 22), respectivement un mécanisme de chauffage séparé (26 ; 27).

16. Dispositif (10) selon l'une quelconque des revendications 13 à 15, **caractérisé en ce que** l'on prévoit au moins un mécanisme (28) destiné à avoir une influence sur les côtés qui est disposé en amont par rapport au mécanisme de guidage conjoint (20) et/ou sous la forme d'une partie de ce dernier et/ou en amont du mécanisme de placage par laminage (14.1) ; dans lequel les brames (16, 22) que l'on a obtenues à partir des barres (13, 19) qui ont été produites avec les première/deuxième machines de coulée (12, 18) peuvent être amenées, contre leurs bords latéraux, en contact avec le mécanisme (28) destiné à avoir une influence sur les côtés, pour pouvoir ainsi être orientées latéralement l'une en direction de l'autre ; de préférence **en ce que** ledit au moins un mécanisme (28) destiné à avoir une influence sur les côtés est réalisé sous la forme d'une règle de guidage qui peut être mise en mouvement, en particulier avec une force prédéterminée, dans la direction du milieu de la bande.

17. Dispositif (10) selon l'une quelconque des revendications 13 à 16, **caractérisé en ce que**, entre les machines de coulée (12, 18) et le mécanisme de guidage conjoint (20), est disposé au moins un mécanisme de nettoyage (30), de préférence un mécanisme de décalaminage, au moyen duquel on peut nettoyer, de préférence on peut décalaminer ladite au moins une brame (16, 22) que l'on a obtenue par solidification à partir des barres (13, 19) qui ont été produites avec les machines de coulée (12, 18).

18. Dispositif (10) selon l'une quelconque des revendications 13 à 17, **caractérisé par** un mécanisme procurant un gaz de protection (32) qui est disposé avant le mécanisme de guidage conjoint (20) et/ou sous la forme d'une partie du mécanisme de guidage conjoint (20) et/ou sous la forme d'une partie d'un mécanisme de placage par laminage (14.1) disposé en aval, en position directement limitrophe au mécanisme de guidage conjoint (20) ; dans lequel on guide au moins une des brames (16, 22), de préférence les deux brames (16, 22), que l'on a obtenues à partir des barres (13, 19), à l'intérieur de ce mécanisme procurant un gaz de protection (32) dans une atmosphère d'un gaz de protection.

19. Dispositif (10) selon l'une quelconque des revendications 13 à 18, **caractérisé en ce que** l'on prévoit, en aval par rapport à un mécanisme de placage par laminage (14.1), un mécanisme de mesure (36) au moyen duquel on peut enregistrer une qualité matérielle de la matière composite continue unique (11) que l'on a obtenue sous la forme d'une bande, en particulier en utilisant des rayons X et/ou des ultrasons.

20. Dispositif (10) selon l'une quelconque des revendications 13 à 19, **caractérisé en ce que** l'on prévoit au moins une troisième machine de coulée avec laquelle on produit une barre continue supplémentaire ; dans lequel cette troisième machine de coulée est disposée en ligne avec le mécanisme de placage par laminage (14.1).
